# EUROPÄISCHE PATENTSCHRIFT

(11) **EP 3 183 518 B1**
(45) Veröffentlichungstag und Bekanntmachung des Hinweises auf die Patenterteilung: **14.07.2021**
(21) Anmeldenummer: 15753444.7
(22) Anmeldetag: 23.07.2015
(51) Int. Cl.: F25D 23/02, B32B 5/18, B32B 25/08, B32B 27/06, B32B 27/08, B32B 27/18, B32B 27/20, B32B 27/28, B32B 27/30, B32B 27/34, B32B 27/36, B32B 27/38, B32B 27/40, B32B 27/42, B32B 3/04, B32B 3/08

(54) **VERSCHLUSSANORDNUNG**
CLOSURE ARRANGEMENT
DISPOSITIF DE FERMETURE

(30) Priorität: 21.08.2014 DE 202014103892 U
(43) Veröffentlichungstag der Anmeldung: 28.06.2017
(73) Patentinhaber: REHAU AG + Co, 95111 Rehau (DE)
(72) Erfinder: SCHÖBEL, Michael, 95100 Selb (DE); ZIELKE, Peter, 08626 Adorf (DE); WILLERT, Manfred, 91257 Pegnitz (DE)
(86) Internationale Anmeldenummer: PCT/IB2015/001235
(87) Internationale Veröffentlichungsnummer: WO 2016/027140

(56) Entgegenhaltungen:
- DE-A1-102012 221 010
- DE-A1-102012 223 539
- None

## Beschreibung

Die Erfindung betrifft eine Verschlussanordnung für die Öffnung eines Kühl- und / oder Gefriergerätes mit wenigstens einer ersten Wand sowie wenigstens einem Vakuumisolationspaneel.

Derartige Verschlussanordnungen sind im Stand der Technik bereits seit vielen Jahren bekannt.

Dabei wird im Allgemeinen für diese als Kältegerätetüren ausgeführten Verschlussanordnungen eine Außenwand aus einem lackierten Metall geformt, sowie eine Innenwand aus Kunststoff beispielsweise tiefgezogen.
Die Außenwand und die Innenwand sind entlang ihrer vertikalen Ränder miteinander verbunden und offene Oberseiten bzw. Unterseiten eines aus Außenwand und Innenwand zusammengefügten Hohlkörpers sind bspw. durch Endstücke verschlossen.
Das Innere des Hohlkörpers ist mit einem Dämmmaterial, insbesondere mit einem expandierten Schaumstoff wie beispielsweise Polyurethan vollständig ausgefüllt.
Um verschiedene Modelle von Türen mit verschiedenen Abmessungen herzustellen, ist es insbesondere für die Fertigung der tiefgezogenen Innenwand erforderlich, modellspezifische, unterschiedliche Werkzeuge herzustellen, was die Werkzeugkosten in die Höhe treibt.

Auch die Fertigung der Außenwand in einem separaten Arbeitsgang ist insofern aufwendig, als das auch hier für verschiedene Abmessungen unterschiedliche Werkzeuge mit entsprechend hohen Kosten herzustellen sind und die teilweise verschiedenen Farben der Gehäuse durch unterschiedlich aufwendige Lackierungen sichergestellt werden müssen.
Je nachdem in welche Kategorie die Verschlussanordnung eingesetzt werden soll, entweder für Kühlschränke oder für Gefrierschränke, muss sowohl die Art des Dämmmaterials als auch die Dicke sowie die Dichte entsprechend angepasst werden.

Um derartige Kühl- und / oder Gefriergeräte mit niedrigem Energieverbrauch herstellen zu können, werden sogenannte Vakuumisolationspaneele in das Gehäuse und / oder der Tür mit eingeschäumt.
Wenn ein Vakuumisolationspaneel in einem Kältegerätegehäuse verbaut wird, ist es daher üblich, den inneren Hohlraum einer das Gehäuse bildeten Schale nur zum Teil mit dem Vakuumisolationspaneel auszufüllen, in dem dieses an einer inneren Oberfläche der Schale angeordnet und das von dem Vakuumisolationspaneel nicht belegte Restvolumen des Hohlraums durch Expandierenlassen von Schaum bspw. Polyurethanschaum vollständig ausgefüllt wird.
Dabei stellt sich das Fixieren der Vakuumisolationspaneele an der inneren Oberfläche als schwierig heraus, da dies sehr zeitaufwendig ist und die benötigten, separaten Klebstoffe sehr kostspielig sind.
Weiterhin nachteilig ist, dass der Klebevorgang selbst sehr kompliziert ist und zeitaufwendige Handhabungs- und Andrückschritte umfasst.
Ebenfalls wenig vorteilhaft ist, dass die Wärmedämmwirkung des Schaumes zu der des Vakuumisolationspaneels deutlich geringer ist, so dass Teile des Schaumes, die sich an den Rändern des kleineren Vakuumisolationspaneels vorbei über die gesamte Wandstärke des Gehäuses bzw. der Tür erstrecken, negativ wirkende Wärmebrücken zwischen der Lagerkammer des Kühl- und / oder Gefriergerätes und seiner Umgebung bilden.

In der DE 29613093 U1 wird beispielsweise die Herstellung einer derartigen Verschlussanordnung beschrieben. Die Anordnung weist eine starre Platte sowie ein Vakuumisolierpaneel auf, wobei das Vakuumisolierpaneel in eine Stahlkassette eingelegt wird, so dass ein etwa 30 mm umlaufender Rand zwischen dem Vakuumisolierpaneel und der Stahlkassette verbleibt. In diesen Spalt wird nun ein Polyurethan-Einkomponentenschaum eingebracht und so das Vakuumisolierpaneel an der Platte fixiert.
In einer alternativen Anordnung wird das Vakuumisolierpaneel mit einer Aluminiumplatte verbunden, auf der schlangenförmig angeordnete Aluminiumrohre aufgeschweißt sind. Während des Aufschäumvorgangs wird das Vakuumisolierpaneel, welches die gleichen Maße wie die Aluminiumplatte aufweist, auf das aufstehende Reaktionsgemisch aufgelegt. Nach dem Aushärten des Schaumes hat dieser die mit den Aluminiumrohren belegte Platte fest mit dem Vakuumisolierpaneel verbunden.
Nachteilig bei diesem Verfahren wird gesehen, dass die Herstellung einer derartigen Verschlussanordnung äußerst zeit- sowie kostenintensiv ist und dass sich gerade in den Randbereichen zwischen dem Vakuumisolierpaneel und dem darin befindlichen Polyurethanschaum negativ wirkende Wärmebrücken bilden können.

Weiterhin wird in der DE 10 2008 026 528 A1 ein Haushaltsgerät, insbesondere ein Kältegerät, sowie ein Verfahren zum Herstellen eines Verbundkörpers und eine Vorschäumform zur Durchführung des Verfahrens offenbart.

Das Haushaltsgerät, insbesondere das Kältegerät, weist einen Korpus mit einem Innenbehälter und Geräteaußenwänden sowie einer dazwischenliegenden Isolationsschicht mit mindestens einem Vakuumisolationspaneel auf.

Das Vakuumisolationspaneel ist dabei mittels einer Schicht aus Flüssighaftmittel an einer Innenseite einer Geräteaußenwand oder an einer Außenseite einer Wand des Innenbehälters flächig befestigt.

Die Isolationsschicht ist dabei aus bekanntem Polyurethanschaumstoff hergestellt und das Flüssighaftmittel als Klebstoff ausgebildet.

Das Verfahren zum Herstellen eines Verbundkörpers mit einem Vakuumisolationspaneel und einer Geräteaußenwand eines Kühlgerätes umfasst mehrere Schritte, wie das Einlegen der Geräteaußenwand oder des Innenbehälters in eine Vorfixierform, das Anlegen eines Formrahmens an eine Innenseite der Geräteaußenwand oder eine Außenseite des Innenbehälters, das Aufbringen eines flüssigen Reaktionsgemisches zur Bildung einer aushärtbaren Flüssighaftmittelschicht auf die durch den Formrahmen begrenzte Innenseite der Geräteaußenwand, das Einlegen des Vakuumisolationspaneels in das flüssige Gemisch, das Schließen der Vorschäumform durch Auflegen einer Deckplatte auf den Formrahmen, das Geschlossenhalten der Vorschäumform bis das flüssige Reaktionsgemisch vollflächig entlang einer der Innenseite der Geräteaußenwand zugewandten Frontseite des Vakuumisolationspaneels und dessen Seitenwände verteilt und ausgehärtet ist.

Nachteilig bei diesem Verbundkörper sowie bei dem Verfahren zu seiner Herstellung sind einerseits die hohen Werkzeugkosten sowie andererseits die zeitaufwendigen und kostenintensiven Einzelschritte zur Herstellung eines einzelnen Verbundkörpers.

Die DE 10 2012 221 010 A1 beschreibt eine Verschlussanordnung für die Öffnung eines Kühl-und / oder Gefriergerätes mit einer ersten Wand, sowie wenigstens einem Vakuumisolationspaneel, wobei das Vakuumisolationspaneel vollumfänglich von einer ausgehärteten Vergussmasse umhüllt und über diese an der ersten Wand fixiert sein soll. Offenbart ist eine wärmeisolierende Wandung, insbesondere für ein Kältegerät, mit wenigstens einer ersten Wandplatte und einem an der Wandplatte befestigten Vakuumisolationspaneel, wobei ein Zwischenraum zwischen der ersten Wandplatte und dem Vakuumisolationspaneel durch einen umlaufenden Rahmen schaumdicht begrenzt und mit Schaumstoff ausgefüllt ist. Der Schaumstoff soll nach dem Aushärten sowohl an der Wandplatte als auch am Vakuumisolationspaneel kleben und so beide zu einer festen Baueinheit verbinden. Die DE 10 2012 221 010 A1 beansprucht weiter ein Verfahren zum Herstellen einer wärmeisolierenden Wandung, insbesondere für ein Kältegerät.

Ein weiterer Nachteil wird darin gesehen, dass auch bei diesem Verbundkörper im Randbereich der Vakuumisolationspaneele Wärmebrücken entstehen und das die Anordnung des Vakuumisolationspaneels an der Außenwand den Wärmedurchgangswert des Verbundkörpers nur unwesentlich verbessert.

Hier setzt die Erfindung ein, die sich die Aufgabe gestellt hat, die Nachteile des bekannten Standes der Technik zu überwinden und eine Verschlussanordnung für die Öffnung eines Kühl- und / oder Gefriergerätes aufzuzeigen, welche wirtschaftlich und kostengünstig herstellbar ist, welche eine hohe Energieeffizienz sowie eine hohe Steifigkeit aufweist.

Erfindungsgemäß wird dies durch die Merkmale des Anspruches 1 gelöst. Weitere vorteilhafte Ausgestaltungen sind in den Unteransprüchen beschrieben.

Es hat sich überraschend herausgestellt, dass eine Verschlussanordnung für die Öffnung eines Kühl- und / oder Gefriergerätes, mit wenigstens einer ersten Wand sowie wenigstens einem Vakuumisolationspaneel sich dadurch auszeichnet, dass das Vakuumisolationspaneel vollumfänglich von einer ausgehärteten Vergussmasse umhüllt und über diese an der ersten Wand fixiert ist, wobei die Vergussmasse nach der Aushärtung eine Dichte zwischen 1,1 bis 1,8 g / cm³, insbesondere zwischen 1,2 bis 1,7 g / cm³ aufweist. Die erfindungsgemäße Verschlussanordnung ist somit ein hochisolierendes und hochsteifes Element, welches wirtschaftlich und kostengünstig herstellbar ist, sowie bei seiner bestimmungsgemäßen Verwendung zum Verschluss der Öffnung eines Kühl- und / oder Gefriergerätes mit hoher Energieeffizienz vorteilhafterweise einsetzbar ist. Das Vakuumisolationspaneel der erfindungsgemäßen Verschlussanordnung wird dabei vorteilhafterweise so von der ersten Wand beabstandet angeordnet, dass bei bestimmungsgemäßer Verwendung der Verschlussanordnung für die Öffnung eines Kühl- und / oder Gefriergerätes das Vakuumisolationspaneel so nahe wie möglich zum Innenraum des Kühlgerätes positionier ist, was die beste Energieeffizienz ermöglicht.
Unter Steifigkeit wird dabei verstanden, der Widerstand der Verschlussanordnung gegen elastische Verformung durch eine Kraft oder ein Drehmoment (Biegemoment oder Torsionsmoment, je nach Beanspruchung) bei deren bestimmungsgemäßer Verwendung.
Die Steifigkeit der Verschlussanordnung hängt somit nicht nur von den elastischen Eigenschaften des bzw. der verwendeten Werkstoffe, sondern auch von der Geometrie, insbesondere dem Querschnitt der einzelnen Elemente, der Länge sowie der Breite ab.
Für schmale, schlanke Verschlussanordnungen mit einheitlicher Größe und Form der Querschnittsfläche über die Länge ist mit Steifigkeit die relative, auf die Länge bezogene Steifigkeit gemeint. Diese ist eine Eigenschaft von Material und Querschnitt.
Als Energieeffizienz ist gemeint, ein Maß für den Energieaufwand zur Erreichung eines festgelegten Nutzens bei dem Kühl- und / oder Gefriergerät. Verbesserte Energieeffizienz der erfindungsgemäßen Verschlussanordnung und damit auch eines Kühl- und / oder Gefriergerätes ist eine der möglichen Methoden zur Energieeinsparung. Die Kennzeichnung des Energieverbrauchs von unterschiedlichen Kühl- und / oder Gefriergeräten gibt Auskunft über die Energieeffizienz bei deren Nutzung. Ein wichtiges Beispiel dafür ist das EU-Energielabel für Elektrogeräte.

In einer vorteilhaften Ausgestaltung der erfindungsgemäßen Verschlussanordnung ist an der, der ersten Wand gegenüberliegenden, Seite der Verschlussanordnung wenigstens eine zweite Wand angeordnet. Diese zweite Wand, welche beispielsweise aus einem polymeren Werkstoff hergestellt ist, führt zu einer weiteren Erhöhung der Steifigkeit der erfindungsgemäßen Verschlussanordnung. Dabei kann vorteilhafterweise der Werkstoff der ersten Wand und / oder der zweiten Wand je nach den Anforderungen beispielsweise der Größe oder der Art des Kühl- und / oder Gefriergerätes ausgewählt sein aus den polymeren und / oder den metallischen und / oder den duromeren Werkstoffen.

Vorteilhafterweise wird sowohl die erste Wand, welche bei bestimmungsgemäßer Verwendung der erfindungsgemäßen Verschlussanordnung eine Außenwand darstellt, als auch die zweite Wand, welche bei bestimmungsgemäßer Verwendung der erfindungsgemäßen Verschlussanordnung eine Innenwand darstellt aus einem polymeren Werkstoff hergestellt, welcher wirtschaftlich und kostengünstig ist, in verschiedensten Farben und Geometrien zur Verfügung gestellt werden kann und der gegenüber den bisher verwendeten metallischen Werkstoffen eine werkstoffimmanente Isolationswirkung aufweist.

In einer weiteren vorteilhaften Ausgestaltung der erfindungsgemäßen Verschlussanordnung ist die zweite Wand über das in der ausgehärteten Vergussmasse umhüllte Vakuumisolationspaneel von der ersten Wand beabstandet angeordnet. Durch die Beabstandung zur ersten Wand, welche bei bestimmungsgemäßen Einsatz der Verschlussanordnung für die Öffnung eines Kühl- und / oder Gefriergerätes die sogenannte Außenwand darstellt, ist eine höhere Energieeffizienz erreichbar.

Als Vakuumisolationspaneele werden im Allgemeinen Wärmedämmplatten verstanden, die durch Evakuieren eines Körperhohlraumes eine reduzierte Wärmeleitfähigkeit aufweisen. Derartige Vakuumisolationspaneele weisen im Allgemeinen eine Hülle auf, die eine hohe Dichtigkeit gegen Gasdurchtritt aufweist, wobei diese Hülle mit einem poröseren Kernmaterial gefüllt ist. Das Kernmaterial bildet nach dem Evakuieren der Hülle einen festen Stützkörper, wobei zur Erzielung eines möglichst geringen Restgasgehaltes ein offenporiges Kernmaterial verwendet wird. Die sehr hohe wärmeisolierende Wirkung der Vakuumisolationspaneele wird überwiegend durch dieses Evakuieren erreicht. So können für das Kernmaterial beispielsweise mikroporöse Kieselsäuren sowie Perlite aber auch mikrozellulose Fasermaterialien oder offenporige Kunststoffschäume verwendet werden. Ein wichtiges Kriterium für das Material des Stützkörpers und deren Formbeständigkeit ist die Druckbelastbarkeit. Die Wärmeisolationsbeständigkeit ist abhängig von der Gas- und Wasserdampfsperrfähigkeit der das Kernmaterial umgebenden Hülle. Hier werden im Allgemeinen Metallfolien insbesondere aus Aluminium verwendet. Aufgrund der guten Wärmeleitfähigkeit von metallischen Werkstoffen insbesondere von Aluminium sollen die Dicken der Schichten sehr dünn ausgebildet sein. Die Metallfolie dient dabei im Wesentlichen dazu, die Wärmestrahlung zu reflektieren sowie die Gas- und Wasserdampfsperrfähigkeit zu gewährleisten.

Ebenfalls vorteilhaft bei der erfindungsgemäßen Verschlussanordnung ist, dass die ausgehärtete Vergussmasse die zweite Wand fixiert. Hierdurch lässt sich die erfindungsgemäße Verschlussanordnung wirtschaftlich und kostengünstig herstellen sowie durch die Wahl der Werkstoffe, der Dimensionen der ersten Wand und der zweiten Wand zusätzlich die Energieeffizienz aber auch die Gas- und Wasserdampfdurchlässigkeit der erfindungsgemäßen Verschlussanordnung positiv beeinflussen.

Die erfindungsgemäße Verschlussanordnung zeichnet sich auch dadurch aus, dass an der ersten Wand und/oder der zweiten Wand wenigstens ein Profilelement und/oder ein Formteil angeordnet ist, welche eine wirtschaftliche sowie kostengünstige Herstellung sowie eine erhöhte Steifigkeit der erfindungsgemäßen Verschlussanordnung sicherstellen.

Durch den Einsatz von beispielsweise polymeren Werkstoffen für die erste Wand und/oder die zweite Wand kann somit vorteilhafterweise das Gewicht der erfindungsgemäßen Verschlussanordnung reduziert, die Herstellungskosten gesenkt und insbesondere kann die Bautiefe der erfindungsgemäßen Verschlussanordnung gegenüber der im bisher bekannten Stand der Technik beschriebenen Bautiefe um bis zu 40 % reduziert werden. Dies bei gleichzeitiger Erhöhung der Energieeffizienz um bis zu 10 %.

Ein weiterer Vorteil der erfindungsgemäßen Verschlussanordnung besteht darin, dass durch die Wahl des Werkstoffes bzw. der Dimensionierung der ersten Wand und / oder der zweiten Wand eine hochsteife und hochisolierende erfindungsgemäße Verschlussanordnung herstellbar ist, die im Gegensatz zum Stand der Technik nicht korrosionsanfällig ist und in verschiedensten Farben und Dekoren kostengünstig zur Verfügung stellbar ist.

In einer weiteren vorteilhaften Ausgestaltung der erfindungsgemäßen Verschlussanordnung ist die erste Wand über wenigstens ein Profilelement und/oder ein Formteil von der zweiten Wand beabstandet angeordnet. Dieses Profilelement und/oder ein Formteil, welches beispielsweise über die gesamte Länge / Breite der erfindungsgemäßen Verschlussanordnung angeordnet ist, erhöht weiter die Steifigkeit der erfindungsgemäßen Verschlussanordnung. Es liegt jedoch auch im Rahmen der Erfindung, dass statt einem über die gesamte Länge bzw. Breite der erfindungsgemäßen Verschlussanordnung angeordnetes Profilelement separate bzw. partiell angeordnete Formteile angeordnet sind, welche einerseits zur besseren Beabstandung der ersten Wand von der zweiten Wand dienen und welche andererseits ebenfalls die Steifigkeit der erfindungsgemäßen Verschlussanordnung verbessern.

Die erfindungsgemäße Verschlussanordnung zeichnet sich weiterhin dadurch aus, dass an der ersten Wand und / oder der zweiten Wand und / oder dem Profilelement und/oder ein Formteil wenigstens ein Dichtelement angeordnet ist. Dieses Dichtelement kann somit an verschiedenen Positionen der erfindungsgemäßen Verschlussanordnung positioniert sein, so dass bei bestimmungsgemäßer Verwendung der Verschlussanordnung die Öffnung eines Kühl- und / oder Gefriergerätes abdichtend verschlossen ist.
Weiterhin kann durch die erfindungsgemäße Verschlussanordnung aufgrund ihrer im Gegensatz zum Stand der Technik stark reduzierten Bautiefe insbesondere das Nutzvolumen eines Kühl- und / oder Gefriergerätes erhöht und gleichzeitig die Energieeffizienzklasse, gekennzeichnet durch das EU- Energielabel für Elektrogeräte, weiter verbessert werden.

Es hat sich weiterhin als vorteilhaft bei der erfindungsgemäßen Verschlussanordnung herausgestellt, dass die Vergussmasse ausgewählt ist aus der Gruppe Polyester, Polyurethane, Epoxide, Silikone, Vinylester, Phenole, Acrylate und dergleichen. Hierdurch kann sowohl die Steifigkeit der erfindungsgemäßen Verschlussanordnung als auch die Wärmeleitfähigkeit der erfindungsgemäßen Verschlussanordnung variiert und verbessert werden.

Weiterhin vorteilhaft bei der erfindungsgemäßen Verschlussanordnung ist, dass die Vergussmasse wenigstens eine Komponente A und wenigstens eine Komponente B aufweist in einem Mischungsverhältnis A:B in Gew.-% von etwa 100:10 bis 100:40. Durch die Wahl des Mischungsverhältnisses lassen sich erfindungsgemäße Verschlussanordnungen zur Verfügung stellen, die unterschiedliche Steifigkeiten und Wärmeisolationswerte aufweisen, je nachdem, ob die erfindungsgemäße Verschlussanordnung für die Öffnung eines Kühlgerätes oder eines Gefriergerätes verwendet werden soll.

Ebenfalls vorteilhaft bei der erfindungsgemäßen Verschlussanordnung ist, dass die Komponenten A ein Harz ist, ausgewählt aus der Gruppe Polyesterharz, Polyurethanharz, Epoxidharz, Silikonharz, Vinylesterharz, Phenolharz, Acrylharz und dergleichen.
Bei der Komponente A hat es sich als vorteilhaft herausgestellt, bspw. Polyurethanharze einzusetzen, welche eine Viskosität von etwa 100.000 bis 200.000 mPas bei 20°C gemäß DIN 53019, insbesondere 110.000 bis 180.000 mPas bei 20°C gemäß DIN 53019 aufweisen. Diese Harze weisen relativ kurze sogenannte Topfzeiten auf und führen zu einer guten Fixierung auf verschiedensten Werkstoffen wie bspw. Kunststoffen, Glas, Metall usw.

In einer weiteren vorteilhaften Ausgestaltung ist die Komponente A ein Epoxidharz, mit einer Viskosität von etwa 8.000 bis 80.000 mPas bei 20°C, insbesondere 10.000 bis 50.000 mPas bei 20°C gemäß DIN 53019. Dieser Werkstoff ist sehr leicht mischbar und einfärbbar und weist eine geringe Topfzeit bzw. Aushärtung bei Raumtemperatur auf.

Dies ist bei der erfindungsgemäßen Verschlussanordnung insbesondere vorteilhaft, wenn die Komponente B ein Härter ist, ausgewählt aus der Gruppe der Amine, der Isocyanate, der Peroxide und dergleichen. Da die Komponente B ein Härter ist, wird dieser entsprechend dem ausgewählten Harz der Komponente A ausgewählt.

Bei Einsatz eines Polyurethanharzes als Komponente A kommt als Härter ein Isocyanat mit einer Viskosität von etwa 200 bis 400 mPas bei 20°C gemäß DIN 53019, insbesondere 220 bis 400 mPas bei 20°C gemäß DIN 53019 zum Einsatz, welches beispielsweise in einem Mischungsverhältnis A:B in Gew.-% von etwa 100:27 eingesetzt ist und nach der Aushärtung zu einer Vergussmasse mit einer Dichte von etwa 1,4m bis 1,5 g / cm³ bei gleichzeitig guter Haftung auf verschiedenen Werkstoffen führt.

Bei Einsatz einer Komponente A als Epoxidharz kommt eine Komponente B als Härter ausgewählt aus der Gruppe der Amine zum Einsatz, mit einer Viskosität von etwa 15.000 bis 25.000 mPas bei 20°C gemäß DIN 53019, welche beispielsweise in einem Mischungsverhältnis A:B in Gew.-% von etwa 100:60 zu einer Vergussmasse führen, die nach ihrer Aushärtung eine Dichte von etwa 1,08 bis 1,12 g / cm³ aufweist. Durch die Kombination des Werkstoffes der Komponente A und / oder der Komponente B sowie der jeweiligen Mischungsverhältnisse miteinander ist die erfindungsgemäße Verschlussanordnung kostengünstig und wirtschaftlich herstellbar, bei gleichzeitig hoher Steifigkeit und Energieeffizienz.

Es hat sich ebenfalls als vorteilhaft bei der erfindungsgemäßen Verschlussanordnung herausgestellt, dass die Vergussmasse auf Grundlage mindestens eines Basispolymers, insbesondere ausgewählt ist aus der Gruppe von (i) Polyurethanen (PUR), insbesondere Polyurethanelastomeren (TPE-U); (ii) Ethylen/Vinylacetat-Copolymeren (EVAC); (iii) Polyolefinen (PO), insbesondere Polyethylenen (PE) und vorzugsweise amorphen Poly-a-olefinen (APAO); (iv) funktionalisierten und/oder modifizierten Polyolefinen, insbesondere silanfunktionalisierten Polyolefinen; (v) Blockcopolymeren, insbesondere kautschukartigen Blockcopolymeren, vorzugsweise Styrol/isopren/Styrol-Blockcopolymeren (SIS-Blockcopolymeren) und Styrol/Butadien/Styrol-Blockcopolymeren (SBS-Blockcopolymeren); (vi) Polyolefincopolymeren, insbesondere metallocenkatalytisch hergestellten Polyolefincopolymeren, vorzugsweise insbesondere metallocenkatalytisch hergestellten Ethylen/Octen-Copolymeren und Propen/Hexen-Copolymeren; (vii) Polyestern (PET), insbesondere Polyester-Elastomeren (PET-E); (viii) Polyamiden (PA) und Copolyamiden, insbesondere Copolyamid-Elastomeren (TPE-A); sowie deren Mischungen, besonders bevorzugt Polyurethanen und/oder wobei als Vergussmasse ein System auf Basis metallocenkatalytisch hergestellter Copolymere, vorzugsweise auf Grundlage mindestens zweier Olefine.
Zusätzlich werden noch Harze, wie bspw. Kolophonium, Terpene, Kohlenwasserstoffharze; Stabilisatoren; Antioxidantien, wie bspw. Phenole, Peroxide, Lichtschutzmittel; Wachse, wie bspw. natürlich oder synthetisch hergestellte; sowie Nukleierungsmittel zugesetzt, in Mengen von 1 Gew.-% bis 70 Gew.-%, insbesondere 5 Gew.-% bis 65 Gew.-%, vorzugsweise 10 Gew.-% bis 60 Gew.-%, bezogen auf die Gesamtmasse der Vergussmasse.

Es hat sich weiterhin als vorteilhaft bei der erfindungsgemäßen Verschlussanordnung gezeigt, dass die Vergussmasse organische und/oder anorganische Füllstoffe in einer Menge von etwa 0,1 bis 85 %, vorzugsweise 1 bis 45 %, bezogen auf die Gesamtmasse, eingelagert enthält.
Hier kommen bspw. anorganische Füllstoffe zum Einsatz, die partikelförmig und/oder sphärolitisch und / oder faserförmig und / oder blättchenförmig und / oder stäbchenförmig ausgebildet sind, ausgewählt aus der Gruppe der Elemente: C, Si, AI, Ca, Ti, Fe, Zn, Sn. Weiterhin können auch organische Füllstoffe verwendet werden, die partikelförmig und/oder sphärolitisch und / oder faserförmig und / oder blättchenförmig und / oder stäbchenförmig ausgebildet sind, ausgewählt aus der Gruppe der Elemente C, O, H.

Durch die Wahl des Werkstoffes sowie der Menge des Füllstoffes kann die Steifigkeit sowie die Energieeffizienz der erfindungsgemäßen Verschlussanordnung modifiziert, insbesondere verbessert werden.

Es hat sich als vorteilhaft erwiesen, wenn Farbmittel zur Einfärbung der Vergussmasse in Form von Pigmenten zu Einsatz kommen, in einer Menge von etwa 0,05 bis 20 %, vorzugsweise 0,1 bis 15 %, bezogen auf die Gesamtmasse, die ausgewählt sind aus anorganischen Pigmenten wie Titandioxid, Zinkoxid, Eisenoxidschwarz, Spinellschwarz, Rotpigmenten, Gelbpigmenten, Grünpigmenten, Blaupigmenten, Braunpigmenten und/oder aus organischen Pigmenten wie Ruß, Schwarzpigmenten, Gelbpigmenten, Rotpigmenten, Grünpigmenten, Blaupigmenten, Violettpigmenten, Braunpigmenten.

Alternativ lassen sich Farbstoffe, wie gelbe, rote, grüne, blaue, violette, oder braune Farbstoffe vorteilhaft zur Einfärbung einsetzen.

Es ist auch möglich, die Einfärbung mit anderen Farbmitteln mit Trägerrohstoffen, wie flüssigen oder pastösen Trägerrohstoffen oder mit Farbmasterbatches vorzunehmen.

Die erfindungsgemäße Verschlussanordnung ist weiterhin so ausgebildet, dass die Vergussmasse nach der Aushärtung eine Shore-D-Härte gemäß DIN EN ISO 868 zwischen 70 und 80 aufweist. Neben der wirtschaftlichen und kostengünstigen Herstellung der erfindungsgemäßen Verschlussanordnung ist durch die Wahl der Werkstoffe der Komponente A und der Komponente B, ihrem Mischungsverhältnis sowie der Art und Menge der Füllstoffe die erfindungsgemäße Verschlussanordnung hinsichtlich ihrer Steifigkeit variierbar herstellbar.

Die erfindungsgemäße Verschlussanordnung ist so ausgebildet, dass die Vergussmasse nach der Aushärtung einen Biege-E-Modul gemäß DIN EN 178 zwischen 1.800 bis 2.500 MPa aufweist. Dieser Biege-E-Modul ist ein deutlicher Nachweis für die hohe Steifigkeit der erfindungsgemäßen Verschlussanordnung.

Ein weiterer Vorteil der erfindungsgemäßen Verschlussanordnung besteht darin, dass die aus dem Stand der Technik bekannten negativ wirkenden Wärmebrücken gar nicht erst entstehen können.

Weiterhin können die beim Schäumen im Stand der Technik entstehenden Hohlräume bzw. Lunker, welche die Energieeffizienz der Verschlussanordnung reduzieren, ebenfalls gar nicht erst auftreten.

Die Erfindung betrifft weiterhin ein Kühl- und / oder Gefriergerät mit wenigstens einer Verschlussanordnung mit den beschriebenen Merkmalen.

Die erfindungsgemäße Verschlussanordnung soll nun an Ausführungsbeispielen, die diese nicht einschränken, beschrieben werden.

Es zeigen:
- Fig. 1: perspektivische Darstellung einer erfindungsgemäßen Verschlussanordnung für die Öffnung eines Kühl- und / oder Gefriergerätes;
- Fig. 2: Schnittdarstellung einer erfindungsgemäßen Verschlussanordnung;
- Fig. 3: perspektivische Schnittdarstellung einer weiteren erfindungsgemäßen Verschlussanordnung;
- Fig. 4: perspektivische Schnittdarstellung einer weiteren erfindungsgemäßen Verschlussanordnung.

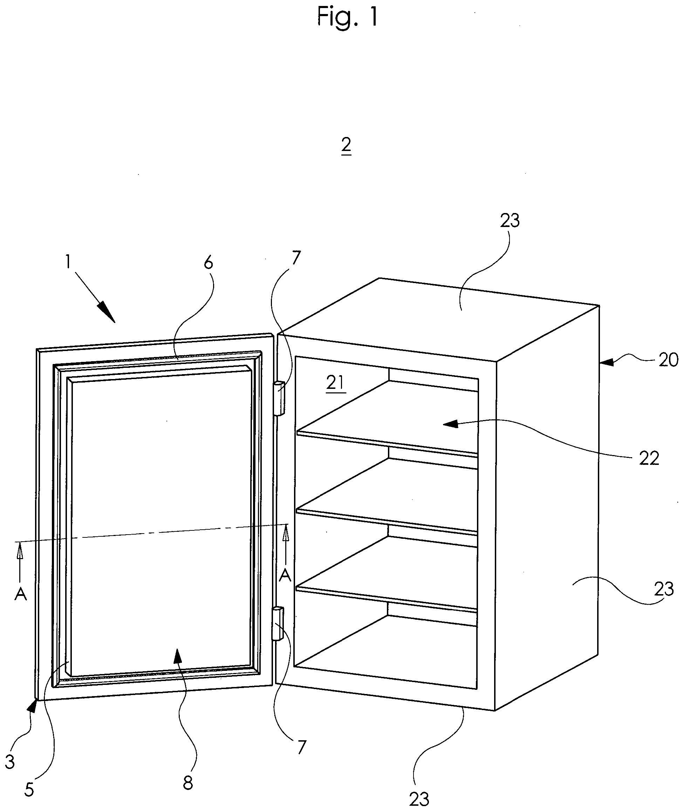

Die Fig. 1 zeigt eine erfindungsgemäße Verschlussanordnung 1 für die Öffnung 22 eines Kühl- und / oder Gefriergerätes 2.

Das Kühl- und / oder Gefriergerät 2 weist einen schrankförmigen Korpus 20, dessen Wände 23 einen Innenraum 21 des Kühl- und / oder Gefriergerätes 2 begrenzen.

Die frontseitige Öffnung 22 des Korpus 20 ist über die erfindungsgemäße Verschlussanordnung 1 verschließbar.

Die erfindungsgemäße Verschlussanordnung 1 ist über Scharnieranordnungen 7 in diesem Ausführungsbeispiel um eine vertikale Achse schwenkbar am Korpus 20 gelagert.

Die erfindungsgemäße Verschlussanordnung 1 weist in diesem Ausführungsbeispiel eine in der geschlossenen Position dem Innenraum 21 zugewandte zweite Wand 8 auf.

Zur zweiten Wand 8 gegenüberliegend angeordnet ist die erste Wand 3, welche bei geschlossener Position der erfindungsgemäßen Verschlussanordnung 1 die Außenwand darstellt.

In diesem Ausführungsbeispiel ist die zweite Wand 8 über das in der ausgehärteten Vergussmasse 5 hier nicht sichtbare Vakuumisolationspaneel von der ersten Wand 3 beabstandet angeordnet.

Die erfindungsgemäße Verschlussanordnung 1 weist in diesem Ausführungsbeispiel an der der ersten Wand 3 ein umlaufendes Dichtelement 6 auf.

Das Dichtelement 6 ist so an der Innenseite der ersten Wand 3 angeordnet, dass es bei geschlossener Position der erfindungsgemäßen Verschlussanordnung 1 um die Öffnung 22 des Kühl- und / oder Gefriergerätes 2, diese abdichtend, am Korpus 20 anliegt.

Weiterhin ist in der Fig. 1 ein Kühl- und / oder Gefriergerät 2 dargestellt, mit wenigstens einer Verschlussanordnung 1 gemäß den Merkmalen der Ansprüche 1 bis 12.

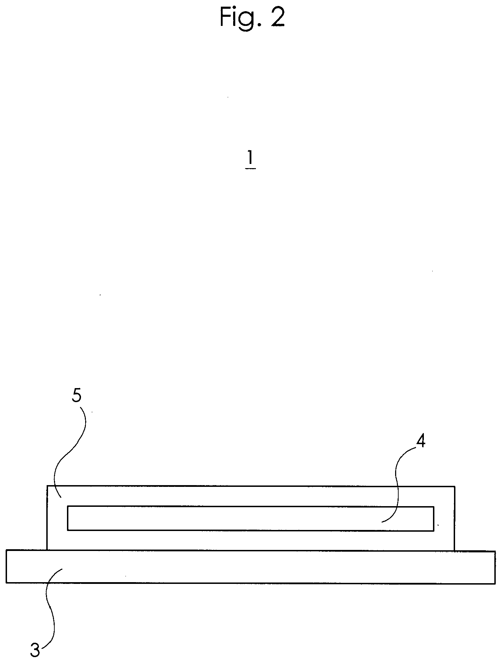

In der Fig. 2 ist eine Schnittdarstellung einer erfindungsgemäßen Verschlussanordnung 1 dargestellt.

Die erfindungsgemäße Verschlussanordnung 1 weist eine erste Wand 3 sowie ein Vakuumisolationspaneel 4 auf, wobei das Vakuumisolationspaneel 4 vollumfänglich von einer ausgehärten Vergussmasse 5 umhüllt und über diese an der ersten Wand 3 fixiert ist.

Die erfindungsgemäße Verschlussanordnung 1 in diesem Ausführungsbeispiel lässt sich besonders wirtschaftlich sowie kostengünstig herstellen und weist eine hohe Energieeffizienz auf.

Durch die Kombination der ersten Wand 3 mit der Vergussmasse 5 ist eine sehr leichte sowie korrosionsbeständige erfindungsgemäße Verschlussanordnung 1 herstellbar, wobei das Vakuumisolationspaneel 4 in diesem Ausführungsbeispiel von der ersten Wand 3 etwa 30 mm beabstandet ist, so dass die Wärmeisolationswirkung der erfindungsgemäßen Verschlussanordnung 1 verbessert ist.

Die erste Wand 3 weist in diesem Ausführungsbeispiel eine Dicke von etwa 8 mm auf und ist aus einem Mineralwerkstoff hergestellt. Dieser besteht aus einer mineralischen Komponente (bspw. Aluminiumhydroxid) und einem Acrylat oder Polyesterharz, die in industriechemischen Verfahren als Platten in einer Stärke von etwas mehr als einem bis sechzig Millimeter herstellbar sind.

Diese Platten beeinflussen die Steifigkeit der erfindungsgemäßen Verschlussanordnung 1 sowie die Energieeffizienz nochmals positiv.

Die Vergussmasse 5 ist in diesem Ausführungsbeispiel ausgewählt aus der Gruppe der Epoxide und weist als Komponente A Epoxidharz mit einer Viskosität von etwa 10.000 bis 50.000 mPas bei 20°C gemäß DIN 53019 sowie eine Komponente B ausgewählt aus der Gruppe der Amine mit einer Viskosität von etwa 15.000 bis 25.000 mPas bei 20°C gemäß DIN 53019 auf.

Nach der Aushärtung weist die Vergussmasse 5 eine Dichte von etwa 1,10 g / cm³ sowie eine Shore-D-Härte gemäß DIN EN ISO 868 von etwa 80 auf.

Bei der erfindungsgemäßen Verschlussanordnung 1 in diesem Ausführungsbeispiel weist die Vergussmasse 5 nach der Aushärtung einen Biege-E-Modul gemäß DIN EN 178 von 2.500 MPa auf.

Die Energieeffizienz bzw. die Wärmesperrwirkung der erfindungsgemäßen Verschlussanordnung 1 ist um bis zu 10% besser als bei Verschlussanordnungen aus dem bisher bekannten Stand der Technik.

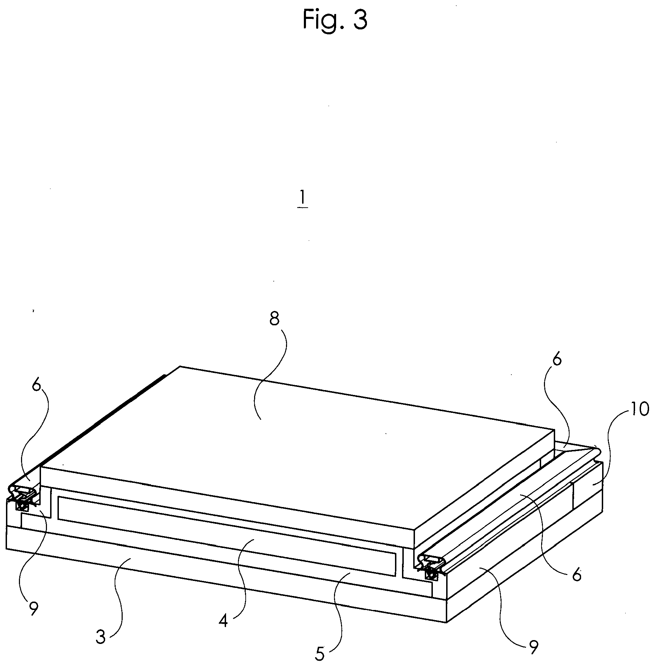

In der Fig. 3 ist eine perspektivische Schnittdarstellung einer weiteren erfindungsgemäßen Verschlussanordnung 1 dargestellt.

Die erfindungsgemäße Verschlussanordnung 1 weist eine erste Wand 3 sowie ein Vakuumisolationspaneel 4 auf, wobei das Vakuumisolationspaneel 4 vollumfänglich von einer ausgehärteten Vergussmasse 5 umhüllt und über diese an der ersten Wand 3 fixiert ist.

In diesem Ausführungsbeispiel weist die erfindungsgemäße Verschlussanordnung 1 eine zweite Wand 8 auf, die über das in der ausgehärteten Vergussmasse 5 umhüllte Vakuumisolationspaneel 4 von der ersten Wand 3 beabstandet angeordnet ist.

Die erfindungsgemäße Verschlussanordnung 1 zeichnet sich in diesem Ausführungsbeispiel weiterhin dadurch aus, dass die erste Wand 3 über wenigstens ein Profilelement 9 von der zweiten Wand 8 beabstandet angeordnet ist.

In diesem Ausführungsbeispiel der erfindungsgemäßen Verschlussanordnung 1 weist die Vergussmasse 5 nach der Aushärtung eine Dichte von etwa 1,62 g / cm³ sowie eine Shore-D-Härte gemäß DIN EN ISO 868 von etwa 80 auf.

Die Vergussmasse 5 ist dabei ausgewählt aus der Gruppe der Polyurethane mit einer Komponente A aus der Gruppe der Polyurethanharze mit einer Viskosität von etwa 120.000 mPas bei 20°C gemäß DIN 53019 und einer Komponente B ausgewählt aus der Gruppe der Isocyanate mit einer Viskosität von etwa 400 mPas bei 20°C gemäß DIN 53019.

Die Vergussmasse 5 weist in diesem Ausführungsbeispiel die Komponente A und die Komponente B in einem Mischungsverhältnis A:B in Gew.-% von etwa 100:25 auf.

Nach der Aushärtung weist die Vergussmasse 5 eine Zugscherfestigkeit nach DIN EN 1465 von etwa 6 MPa auf.

Bei der erfindungsgemäßen Verschlussanordnung 1 in diesem Ausführungsbeispiel weist die Vergussmasse 5 nach der Aushärtung einen Biege-E-Modul gemäß DIN EN 178 von etwa 2.300 MPa auf.

Das Vakuumisolationspaneel 4 ist in diesem Ausführungsbeispiel etwa 10 mm gegenüber der zweiten Wand 8 und etwa 20 mm gegenüber der ersten Wand 3 angeordnet.

Das Abstandsverhältnis der ersten Wand 3 zur zweiten Wand 8 beträgt wenigstens 2:1, so dass dies zu sehr schmalen und energieeffizienten Verschlussanordnungen 1 führt.

An den freien Randbereichen der ersten Wand 3 ist das Profilelement 9 angeordnet.

Das Profilelement 9 ist in diesem Ausführungsbeispiel aus einem polymeren Werkstoff hergestellt und über die Vergussmasse 5 mit der ersten Wand 3 beabstandet zur zweiten Wand 8 angeordnet.

Im Eckbereich der Verschlussanordnung 1 ist an der ersten Wand 3 ein Formteil 10 angeordnet, welches als sogenannter Eckverbinder die rechtwinklig zueinander angeordneten Profilelemente 9 fixierend verbindet.

Die erfindungsgemäße Verschlussanordnung 1 weist in diesem Ausführungsbeispiel an allen vier Ecken der ersten Wand 3 jeweils ein Formteil 10 auf, welches die dazwischen angeordneten Profilelemente 9 fixierend verbindet.

Die Profilelemente 9 führen in diesem Ausführungsbeispiel mit den Formteilen 10 zu einer höheren Steifigkeit sowie zu einer wirtschaften und kostengünstigen Herstellung der erfindungsgemäßen Verschlussanordnung 1.

Die erste Wand 3 ist in diesem Ausführungsbeispiel hergestellt aus einem polymeren Werkstoff, nämlich aus Acrylnitril-Butadien-Styrol (ABS) und weist eine Dicke von etwa 6 mm auf. Die zweite Wand 8 ist in diesem Ausführungsbeispiel ebenfalls aus einem polymeren Werkstoff, nämlich aus Polystyrol (PS), hergestellt und weist eine Dicke von etwa 5 mm auf.

Die erste Wand 3 ist in diesem Ausführungsbeispiel in ihren Grundabmessungen Länge und Breite größer ausgebildet, als die zweite Wand 8.
In dieser vorteilhaften Ausführung sind das Profilelement 9, das Formteil 10 sowie das Dichtelement 6 zwischen den freien Randbereichen der ersten Wand 3 sowie der zweiten Wand 8 anordenbar.

Die erfindungsgemäße Verschlussanordnung 1 weist in diesem Ausführungsbeispiel weiterhin ein Dichtelement 6 auf, welches an dem Profilelement 9 angeordnet ist.
Das Profilelement 9 sowie das daran angeordnete Dichtelement 6 sind vollumfänglich an der Innenseite der ersten Wand 3 angeordnet und führen bei bestimmungsgemäßer Verwendung der erfindungsgemäßen Verschlussanordnung 1 dazu, dass die Öffnung 22 eines Kühl- und / oder Gefriergerätes 2 abdichtend und isolierend verschließbar ist.

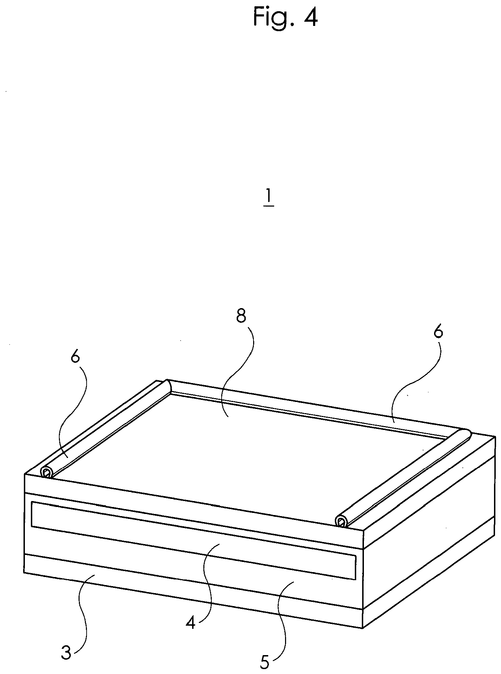

In der Fig. 4 ist eine perspektivische Schnittdarstellung einer weiteren erfindungsgemäßen Verschlussanordnung 1 dargestellt.

Die Verschlussanordnung 1 für die Öffnung eines Kühl- und / oder Gefriergerätes weist in diesem Ausführungsbeispiel eine erste Wand 3 sowie ein Vakuumisolationspaneel 4 auf. Das Vakuumisolationspaneel 4 ist vollumfänglich von einer ausgehärteten Vergussmasse 5 umhüllt und über diese an der ersten Wand 3 fixiert.

An der der ersten Wand 3 gegenüberliegenden Seite der Verschlussanordnung 1 ist eine zweite Wand 8 angeordnet, welche in diesem Ausführungsbeispiel die gleichen äußeren Abmessungen Länge und Breite wie die erste Wand 3 aufweist.
Die zweite Wand 8 ist über das in der ausgehärteten Vergussmasse 5 umhüllte Vakuumisolationspaneel 4 von der ersten Wand 3 beabstandet angeordnet.

Der Abstand des Vakuumisolationspaneels 4 von der ersten Wand 3 beträgt in diesem Ausführungsbeispiel etwa 50 mm und der Abstand des Vakuumisolationspaneels 4 zur zweiten Wand 8 ist etwa 10 mm.

Das Abstandsverhältnisse der ersten Wand 3 zur zweiten Wand 8 beträgt etwa 5:1.

Durch diese Positionierung wird die Energieeffizienz der erfindungsgemäßen Verschlussanordnung 1 weiter erhöht.

Die erfindungsgemäße Verschlussanordnung 1 ist in diesem Ausführungsbeispiel weiterhin so ausgebildet, dass an der zur ersten Wand 3 beabstandet angeordneten zweiten Wand 8 wenigstens ein Dichtelement 6 angeordnet ist.

Das Dichtelement 6 ist in diesem Ausführungsbeispiel als sogenannte Balgdichtung ausgebildet, die an der zweiten Wand 8 umlaufend angeordnet ist und somit einen Rahmen bildet, der bei bestimmungsgemäßer Verwendung der erfindungsgemäßen Verschlussanordnung 1 dazu führt, dass die Öffnung 22 eines Kühl- und / oder Gefriergerätes 2 abdichtend und isolierend verschließbar ist.

Das Dichtelement 6 ist in diesem Ausführungsbeispiel vom äußeren Rand der zweiten Wand 8 beabstandet angeordnet und gegenüberliegend dem in der Vergussmasse 5 fixierten Vakuumisolationspaneel 4 positioniert.

In diesem Ausführungsbeispiel ist die Vergussmasse 5, welche nach der Aushärtung eine Dichte von 1,4 g /cm³ sowie eine Shore-D-Härte gemäß DIN EN ISO 868 von 70 aufweist, ausgewählt aus der Gruppe der Polyurethane mit einer Komponente A als Polyurethanharz mit einer Viskosität von etwa 150.000 mPas bei 20°C gemäß DIN 53019 und einer Komponente B ausgewählt aus der Gruppe der Isocyanate mit einer Viskosität von etwa 300 mPas bei 20°C gemäß DIN 53019 sowie einem Füllstoffgehalt 60 Gew.-%.

Bei der erfindungsgemäßen Verschlussanordnung 1 in diesem Ausführungsbeispiel weist die Vergussmasse 5 nach der Aushärtung einen Biege-E-Modul gemäß DIN EN 178 von 2.500 MPa auf.

Die ausgehärtete Vergussmasse 5 fixiert sowohl die erste Wand 3 als auch die zweite Wand 8 und umschließt das Vakuumisolationspaneel 4 vollumfänglich.

In diesem Ausführungsbeispiel der erfindungsgemäßen Verschlussanordnung 1 ist das Vakuumisolationspaneel 4 so ausgewählt, dass es eine Dicke von etwa 20 mm aufweist und das seine Schmalseiten vom Rand der ausgehärteten Vergussmasse 5 etwa 5 mm beabstandet angeordnet ist. Dies führt zu einer hohen Energieeffizienz der erfindungsgemäßen Verschlussanordnung 1, da hier insbesondere im Randbereich keine Wärmebrücken entstehen.

## Patentansprüche

1. Verschlussanordnung (1) für die Öffnung (22) eines Kühl- und / oder Gefriergerätes (2), mit wenigstens einer ersten Wand (3), sowie wenigstens einem Vakuumisolationspaneel (4), wobei das Vakuumisolationspaneel (4) vollumfänglich von einer ausgehärteten Vergussmasse (5) umhüllt und über diese an der ersten Wand (3) fixiert ist, **dadurch gekennzeichnet, dass** die Vergussmasse (5) nach der Aushärtung eine Dichte zwischen 1,1 bis 1,8 g/cm³, insbesondere zwischen 1,2 bis 1,7 g/cm³ aufweist, dass die Vergussmasse (5) nach der Aushärtung eine Shore-D-Härte gemäß DIN EN ISO 868 zwischen 70 und 80 aufweist, dass die Vergussmasse (5) nach der Aushärtung einen Biege-E-Modul gemäß DIN EN 178 zwischen 1.800 bis 2.500 MPa aufweist.

2. Verschlussanordnung (1) nach Anspruch 1, **dadurch gekennzeichnet, dass** an der der ersten Wand (3) gegenüberliegenden Seite der Verschlussanordnung (1) wenigstens eine zweite Wand (8) angeordnet ist.

3. Verschlussanordnung (1) nach Anspruch 2, **dadurch gekennzeichnet, dass** die zweite Wand (8) über das in der ausgehärteten Vergussmasse (5) umhüllte Vakuumisolationspaneel (4) von der ersten Wand (3) beabstandet angeordnet ist.

4. Verschlussanordnung (1) nach Anspruch 2, **dadurch gekennzeichnet, dass** die ausgehärtete Vergussmasse (5) die zweite Wand (8) fixiert.

5. Verschlussanordnung (1) nach Anspruch 2, **dadurch gekennzeichnet, dass** an der ersten Wand (3) und/oder der zweiten Wand (8) wenigstens ein Profilelement (9) und/oder ein Formteil (10) angeordnet ist.

6. Verschlussanordnung (1) nach Anspruch 2, **dadurch gekennzeichnet, dass** die erste Wand (3) über wenigstens ein Profilelement (9) und/oder ein Formteil (10) von der zweiten Wand (8) beabstandet angeordnet ist.

7. Verschlussanordnung (1) nach Anspruch 2, **dadurch gekennzeichnet, dass** an der ersten Wand (3) und/oder der zweiten Wand (8) und/oder dem Profilelement (9) und/oder ein Formteil (10) wenigstens ein Dichtelement (6) angeordnet ist.

8. Verschlussanordnung (1) nach einem der vorhergehenden Ansprüche, **dadurch gekennzeichnet, dass** die Vergussmasse (5) ausgewählt ist aus der Gruppe Polyester, Polyurethane, Epoxide, Silikone, Vinylester, Phenole, Acrylate und dergleichen.

9. Verschlussanordnung (1) nach einem der vorhergehenden Ansprüche, **dadurch gekennzeichnet, dass** die Vergussmasse (5) wenigstens eine Komponente A und wenigstens eine Komponente B aufweist in einem Mischungsverhältnis A:B in Gew.-% von etwa 100:10 bis 100:40.

10. Verschlussanordnung (1) nach Anspruch 9, **dadurch gekennzeichnet, dass** die Komponente A ein Harz ist, ausgewählt aus der Gruppe Polyesterharz, Polyurethanharz, Epoxidharz, Silikonharz, Vinylesterharz, Phenolharz, Acrylharz und dergleichen.

11. Verschlussanordnung (1) nach Anspruch 9, **dadurch gekennzeichnet, dass** die Komponente B ein Härter ist, ausgewählt aus der Gruppe der Amine, der Isocyanate, der Peroxide und dergleichen.

12. Verschlussanordnung (1) nach einem der vorhergehenden Ansprüche, **dadurch gekennzeichnet, dass** die Vergussmasse (5) organische und/oder anorganische Füllstoffe in einer Menge von etwa 0,1 bis 85 %, vorzugsweise 1 bis 45 %, bezogen auf die Gesamtmasse, eingelagert enthält.

13. Kühl-und / oder Gefriergerät (2) mit wenigstens einer Verschlussanordnung (1) nach einem der Ansprüche 1 bis 12.

## Claims

1. Closure arrangement (1) for the opening (22) of a refrigerator and / or freezer (2), comprising at least one first wall (3) and at least one vacuum insulation panel (4), wherein the vacuum insulation panel (4) is completely encased by a cured casting compound (5) and fixed via this to the first wall (3), **characterised in that** the casting compound (5) has a density following curing of between 1.1 and 1.8 g / cm³, in particular between 1.2 and 1.7 g / cm³, that the casting compound (5) has a Shore D hardness according to DIN EN ISO 868 following casting of between 70 and 80, that the casting compound (5) has a flexural modulus of elasticity according to DIN EN 178 following casting of between 1800 and 2500 MPa.

2. Closure arrangement (1) according to claim 1, **characterised in that** on the side of the closure arrangement (1) opposite the first wall (3) there is arranged at least one second wall (8).

3. Closure arrangement (1) according to claim 2, **characterised in that** the second wall (8) is arranged spaced from the first wall (3) via the vacuum insulation panel (4) encased in the cured casting compound (5).

4. Closure arrangement (1) according to claim 2, **characterised in that** the cured casting compound (5) fixes the second wall (8).

5. Closure arrangement (1) according to claim 2, **characterised in that** at least one profile element (9) and/or a moulding (10) is arranged on the first wall (3) and/or the second wall (8).

6. Closure arrangement (1) according to claim 2, **characterised in that** the first wall (3) is arranged spaced from the second wall (8) via at least one profile element (9) and/or a moulding (10).

7. Closure arrangement (1) according to claim 2, **characterised in that** at least one sealing element (6) is arranged on the first wall (3) and/or the second wall (8) and/or the profile element (9) and/or a moulding (10).

8. Closure arrangement (1) according to any one of the preceding claims, **characterised in that** the casting compound (5) is selected from the group polyesters, polyurethanes, epoxies, silicones, vinyl esters, phenols, acrylates and similar.

9. Closure arrangement (1) according to any one of the preceding claims, **characterised in that** the casting compound (5) comprises at least one component A and at least one component B in a mix ratio A:B in percent by weight of roughly 100:10 to 100:40.

10. Closure arrangement (1) according to claim 9, **characterised in that** the component A is a resin selected from the group polyester resin, polyurethane resin, epoxy resin, silicone resin, vinyl ester resin, phenol resin, acrylate resin and similar.

11. Closure arrangement (1) according to claim 9, **characterised in that** the component B is a curing agent selected from the group of amines, isocyanates, peroxides and similar.

12. Closure arrangement (1) according to any one of the preceding claims, **characterised in that** the casting compound (5) contains in embedded form organic and/or inorganic fillers in a quantity of roughly 0.1 to 85%, preferably 1 to 45% relative to the overall mass.

13. Refrigerator and/or freezer (2) comprising at least one closure arrangement (1) according to any one of claims 1 to 12.

## Revendications

1. Ensemble de fermeture (1) pour l'ouverture (22) d'un appareil de réfrigération et/ou de congélation (2), avec au moins une première paroi (3) ainsi qu'au moins un panneau d'isolation sous vide (4), dans lequel le panneau d'isolation sous vide (4) est enveloppé sur toute la périphérie par une masse de scellement (5) durcie et est fixé par l'intermédiaire de celle-ci sur la première paroi (3), **caractérisé en ce que** la masse de scellement (5) présente après le durcissement une densité entre 1,1 à 1,8 g/cm³, en particulier entre 1,2 à 1,7 g/cm³, que la masse de scellement (5) présente après le durcissement une dureté Shore-D selon la norme DIN EN ISO 868 entre 70 et 80, que la masse de scellement (5) présente après le durcissement un module d'élasticité à la flexion selon la norme DIN EN 178 entre 1.800 à 2.500 MPa.

2. Ensemble de fermeture (1) selon la revendication 1, **caractérisé en ce qu'**au moins une deuxième paroi (8) est disposée sur le côté, faisant face à la première paroi (3), de l'ensemble de fermeture (1).

3. Ensemble de fermeture (1) selon la revendication 2,
**caractérisé en ce que** la deuxième paroi (8) est disposée à distance de la première paroi (3) par l'intermédiaire d'un panneau d'isolation sous vide (4) enveloppé dans la masse de scellement (5) durcie.

4. Ensemble de fermeture (1) selon la revendication 2,
**caractérisé en ce que** la masse de scellement (5) durcie fixe la deuxième paroi (8).

5. Ensemble de fermeture (1) selon la revendication 2,
**caractérisé en ce qu'**au moins un élément profilé (9) et/ou une pièce moulée (10) sont disposés sur la première paroi (3) et/ou sur la deuxième paroi (8).

6. Ensemble de fermeture (1) selon la revendication 2,
**caractérisé en ce que** la première paroi (3) est disposée à distance de la deuxième paroi (8) par l'intermédiaire d'au moins un élément profilé (9) et/ou d'une pièce moulée (10).

7. Ensemble de fermeture (1) selon la revendication 2,
**caractérisé en ce qu'**au moins un élément d'étanchéité (6) est disposé sur la première paroi (3) et/ou sur la deuxième paroi (8) et/ou sur l'élément profilé (9) et/ou sur une pièce moulée (10).

8. Ensemble de fermeture (1) selon l'une quelconque des revendications précédentes,
**caractérisé en ce que** la masse de scellement (5) est choisie parmi le groupe polyesters, polyuréthanes, époxydes, silicones, vinylesters, phénols, acrylates et similaires.

9. Ensemble de fermeture (1) selon l'une quelconque des revendications précédentes,
**caractérisé en ce que** la masse de scellement (5) présente au moins un composant A et au moins un composant B en un rapport de mélange A:B en % en poids d'environ 100:10 à 100:40.

10. Ensemble de fermeture (1) selon la revendication 9, **caractérisé en ce que** le composant A est une résine choisie parmi le groupe résine de polyester, résine de polyuréthane, résine époxy, résine de silicone, résine de vinylester, résine phénolique, résine acrylique et similaire.

11. Ensemble de fermeture (1) selon la revendication 9, **caractérisé en ce que** le composant B est un durcisseur choisi parmi le groupe des aminés, des isocyanates, des peroxydes et similaires.

12. Ensemble de fermeture (1) selon l'une quelconque des revendications précédentes, **caractérisé en ce que** dans la masse de scellement (5) sont incorporées des charges organiques et/ou inorganiques en une quantité d'environ 0,1 à 85 %, de préférence de 1 à 45 %, par rapport à la masse totale.

13. Appareil de réfrigération et/ou de congélation (2) avec au moins un ensemble de fermeture (1) selon l'une quelconque des revendications 1 à 12.
